# EUROPEAN PATENT APPLICATION

(11) **EP 1 377 085 A1**
(43) Date of publication of application: **02.01.2004**
(21) Application number: 03396060.0
(22) Date of filing: 18.06.2003
(51) Int. Cl.: H04Q 7/00, H04Q 7/38

(54) **Positioning based on a reference**

(30) Priority: 20.06.2002 FI 20021206
(71) Applicant: Sonera Oyj, 00510 Helsinki (FI)
(72) Inventor: Taavitsainen, Jari, 90800 Oulu (FI); Karhu, Pekka, 00330 Helsinki (FI)
(74) Representative: Simmelvuo, Markku

(57) **Abstract**

The invention relates to a method and system for determining the position of a wireless terminal device (MTE). By means of the method and system it is possible to determine a client's position on such a level that services requiring accurate positioning, such as e.g. orienteering, can be offered to the mobile station (MTE). In the embodiment in accordance with the invention the terminal device (MTE) is first located roughly by means of the strengths of the signals transmitted by the base stations ( 1 - 3 ). Based on the rough position, from the database (DB), reference points disposed in the vicinity are retrieved, The user of the terminal device (MTE) chooses from the list the reference points seen by him or her, and the information system (SERV) defines the position more closely by calculating a new position based on the rough position and the positions of the reference points. The invention enables one to achieve a considerably better positioning accuracy than that of a positioning to be performed utilising a conventional telecommunications network.

## Description

### FIELD OF THE INVENTION

The present invention relates to telecommunications technology. The object of the present invention is a method and system for determining the position of a terminal device utilising a wireless telecommunications network.

### BACKGROUND OF THE INVENTION

Several methods for locating a terminal device are known in prior art. Some advantageous positioning methods are based on a position to be calculated based on base station or satellite observations. Positioning by means of base stations of a mobile phone network is handy, since no separate terminal device is needed, just the mobile phone. The client only has to carry a mobile phone or some other wireless terminal device that connects to the mobile phone network. The terminal device is located by measuring the signal transmitted by the terminal device at sufficiently many base stations. A highly rough positioning succeeds with just one base station. The position of the terminal device can be mathematically calculated from the measured signals. The disadvantage of the method is inaccuracy. The measurement results are inaccurate, typically of the order of 100 - 500 meters. The measurement results further suffer in case a sufficient number of base stations are not able to receive a signal, e.g. due to a shadow region. When getting out into the countryside, the number of the cells of the telecommunications network grows bigger, and the measurement results can be of the order of kilometres. Different mobile communication networks have a different range and cell size so that the accuracy of the measurement results varies. In networks with a very short range the measuring accuracy suffices for many different applications. The problem with the short-range networks is their coverage area. In order to achieve a sufficient coverage area, a big number of base stations would be needed, and constructing a base station is costly.

With the satellite positioning, a considerably more accurate result is obtained. The measuring accuracy is at best in the range of ten metres or less, which, in view of most services, provides sufficient accuracy. The problem with the satellite positioning is the necessary terminal device that must be acquired in addition to the mobile phone. Terminal devices add to the size and cost of a mobile phone. Also satellite positioning suffers from shadow regions, especially in towns, in which satellites may be totally left behind buildings, and positioning does not succeed at all.

In addition, there are positioning methods in which the user of the application determines his or her position without the positioning methods of the telecommunications network or satellite positioning. In this kind of method, there is a database saved in the terminal device, or there is a connection arranged from it to the database. While positioning, the user of the application stands e.g. in a street corner and inputs into the application e.g. the first three letters of the names of intersecting streets, whereupon the positioning program searches from the database, e.g. from a map, for the possible intersections of streets which meet the given criteria. This kind of solution requires that one should have a specific application in the terminal device being used, in which a huge amount of information has to be arranged. Saving a huge amount of information is problematic due to the limited storage capacity of terminal devices. Known solutions of this kind would practically speaking mean that the user would always have to load the necessary databases into the memory of the device. In case several towns are included in the route, it is possible that the device memory is not capable of accommodating all the databases simultaneously. In that case, the user of the terminal device needs to find a separate loading point from which to download the database. In addition, situations in which intersections of streets that meet the given criteria are found several may cause problems. Particularly problematic are the situations in which the user does not know the names of the streets, or is in a place where it is hard to find the names. Places of this kind are e.g. squares and parks.

### OBJECTIVE OF THE INVENTION

The objective of the invention is to overcome the disadvantages referred to above, or at least significantly to alleviate them. One specific objective of the invention is to disclose a new type of method for determining the location of a terminal device with that kind of accuracy that it enables one to provide to the user of the terminal device services that are related to accurate geographic information, such as e.g. orienteering instructions.

### SUMMARY OF THE INVENTION

The present invention relates to the positioning of a wireless terminal device. In the existing methods, the positioning is performed based on the cell of the mobile phone network. Base stations measure the strength of the signal transmitted by the mobile phone, and the location of the terminal device is calculated based on the observations of several base stations with a certain accuracy. The calculation accuracy depends e.g. on the number of base stations available, as well as on the cell size of the measuring base stations. The geographic information is calculated in the mobile phone network e.g. utilising an intelligent network application. The piece of geographic information thus obtained is used in the method according to the present invention as a rough measurement result.

In several applications this rough positioning accuracy suffices. A rough measurement result is, however, not always sufficient, instead in some applications, the accuracy should be considerably better. It is, for instance, very difficult to give orienteering instructions, in case the position of the person asking for the instructions is not known with sufficient accuracy.

After the rough positioning, in the method according to the invention, an application is started in the terminal device by means of which an accurate location is determined. This application may be e.g. a WAP service, or some other corresponding service in which the terminal device is used to use a server located in the network. A rough piece of geographic information is transmitted to the service, after which the application searches from the database for reference points, observable within the scope of the rough position, e.g. streets, churches, shops, or other easily observable reference points. The scope can be determined beforehand based upon an estimate of the measuring accuracy. The user chooses from the application reference points perceived by him or her, based upon which the application defines the position more closely. This defining more closely is performed several times. Based on the final position, it is possible to provide services such as orienteering services. Instructions for an orienteering service can be transmitted in words or as an image, e.g. by means of a multimedia message.

The invention considerably improves the positioning accuracy of a positioning to be performed utilising the mobile phone network. The utilisation of the invention is advantageous for the user, since no separate terminal device is needed, and the existing mobile phones are provided with the necessary features.

### LIST OF FIGURES

In the following, the invention will be described in detail with reference to the examples of its embodiments, in which
Fig. 1 shows an embodiment of a system according to the invention; and
Fig. 2 shows a functional block diagram of an embodiment according to the invention.

### DETAILED DESCRIPTION OF THE INVENTION

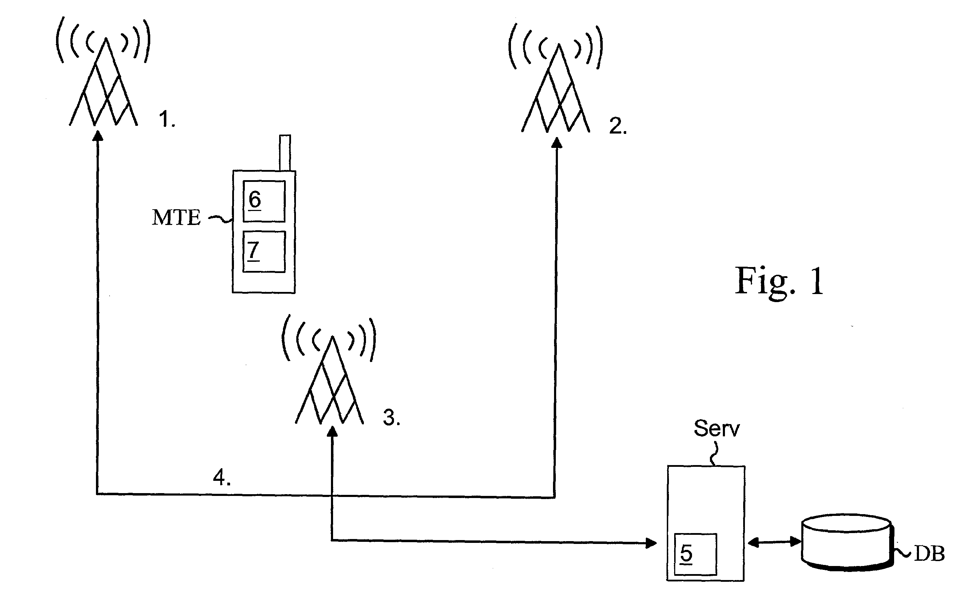

The system as shown in Fig. 1 includes a wireless telecommunications network comprising base stations 1, 2 and 3, a wireless terminal device MTE and an information system SERV with database means DB. The information system SERV maintains the data of the telecommunications network, and there are means 5 arranged therein for assembling a list of reference points. The database means DB can be placed either on the server SERV or on a separate database server. Typically, the signals transmitted by a wireless terminal device MTE, such as e.g. a GSM phone, can be observed by many different base stations 1 - 3. The terminal device MTE is registered to one base station, through which the data and telephone communication from the terminal device MTE is transmitted. Arranged in the terminal device are display means 6 for displaying the list of reference points to the user, and selection means 7 for choosing from the observed reference points. The base stations are connected to the information system DB through a telecommunication connection 4. Based on the strength of the signals measured by the base stations 1 - 3, the information system DB calculates the rough position of the mobile phone. Furthermore, saved in the information system are the reference points needed by the application with their data. The number of base stations is not limited to three. Even just one base station is sufficient for rough positioning, but a considerably better accuracy is achieved by having more base stations.

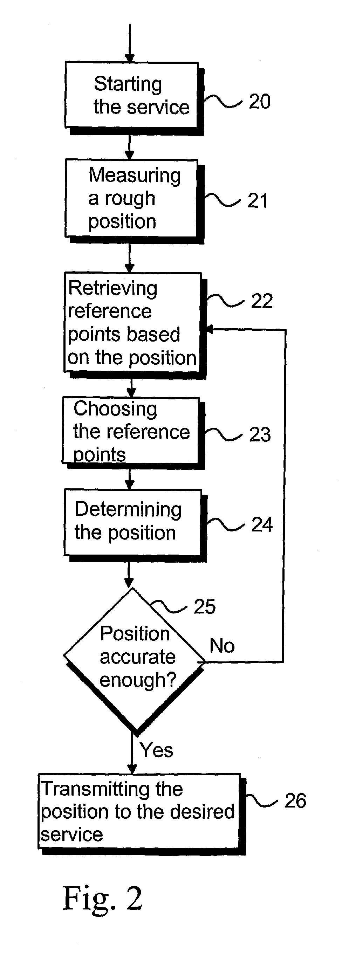

Fig. 2 shows the operation of an application according to the invention step by step. The application in accordance with the invention is started in the terminal device, step 20. The application may be started e.g. by means of a WAP service. From the client's terminal device, a notification is sent to the telecommunications network to start the application.

After the service has been started, a rough position of the terminal device is determined, step 21. A notification informing of the starting of the service is transmitted to the telecommunications network, whereupon the network measures the signal transmitted by the terminal device at the base stations in its vicinity. The measurement data of the base stations are transmitted to the information system, which calculates the rough position of the terminal device.

After the rough position determination of the terminal device, a set of reference points are retrieved from the information system, step 22. Accurate co-ordinates have been determined for the reference points, based on which those reference points are chosen that are disposed sufficiently close to the measured position. Reference points may include e.g. buildings and roads.

A client wishing to have positioning chooses from the reference points one ore more points, step 23. The client may e.g. stand in a park where there is a church. In that case, the client chooses from the reference points a park or a church. By means of the rough position and the chosen reference points, the information system calculates a more accurate position for the client, step 24.

When the position has been determined, it is checked whether the measuring accuracy is sufficient, step 25. In case the measuring accuracy is not sufficient, one must go back to step 22. At step 22, the new calculated position is utilised, in which case reference points are searched for from a smaller area, and as a result, names of streets are obtained, based on which it is easy to determine the accurate position. If the measuring accuracy is sufficient, the measured geographic information is further transmitted to the service where the geographic information is needed. An example of this kind of application is orienteering. The client knows the address where he or she is going to but is lost and starts an orienteering service, which at first finds out the position of the client. Based on the position and object it is possible to make a map, which is transmitted to the client in words or as a multimedia message.

The invention is not limited merely to the examples of its embodiment referred to above, instead many variations are possible within the scope of the inventive idea defined in the claims.

## Claims

1. A method for determining the position of a terminal device, the method comprising the steps of:
measuring the strength of a signal transmitted by the terminal device at several base stations of a telecommunications network; and
calculating the position of the terminal device based on the measured observations;
**characterized in that** the method further comprises the step of:
based on the geographic information, assembling a list of reference points within the scope of the calculated position.

2. The method according claim 1, **characterized in that** displaying on the terminal device the list of reference points.

3. The method according to claim 1 or 2, **characterized in that** choosing from the list the observed reference points.

4. The method according to any one of the preceding claims 1 - 3, **characterized in that** the location information is defined more closely by calculating a new position based on the observed reference points and the previous position.

5. The method according to any one of the preceding claims 1 - 4, **characterized in that** the assembling of the list of reference points, the selection of the reference points and the more close definition of the location information is repeated, until the accuracy of the piece of location information is a desired one.

6. The method according to any one of the preceding claims 1 - 5, **characterized in that** the reference points are observable landmarks, buildings or streets.

7. The method according to any one of the preceding claims 1 - 6, **characterized in that** the reference points are chosen from a list in text form.

8. The method according to any one of the preceding claims 1 - 7, **characterized in that** the reference points are chosen from a list in image form.

9. The method according to any one of the preceding claims 1 - 8, **characterized in that** the extent of the scope of the rough position is determined based on the estimation of the positioning accuracy.

10. The method according to any one of the preceding claims 1 - 9, **characterized in that** the extent of the scope of the rough position is determined as a geographical distance.

11. A system for determining the position of a wireless terminal device, the system comprising:
at least one base station (1 - 3) of a telecommunications network;
a wireless terminal device (MTE);
an information system (SERV) for providing positioning services; and
a telecommunication connection (4) for connecting the terminal device and the information system,
**characterized in that** the system further comprises:
a location database (DB) for saving the location information; and
assembling means (5) for assembling a list of reference points.

12. The system according to claim 11, **characterized in that** the terminal device (MTE) comprises display means (6) for displaying the list of reference points.

13. The system according to claim 11 or 12, **characterized in that** the terminal device comprises selection means (7) for choosing the reference points from the list of reference points.

14. The system according to any one of the preceding claims 11 - 13, **characterized in that** saved to the location database (DB) are the location data of the reference points.

15. The system according to any one of the preceding claims 11 - 14, **characterized in that** the information system (SERV) retrieves from the database (DB) the reference points within the calculated position.

16. The system according to any one of the preceding claims 11 - 15, **characterized in that** the information system (SERV) calculates the new position of the terminal device based on the old position and the observed reference points.
